# FASCICULE DE BREVET EUROPEEN

(11) **EP 2 003 293 B1**
(45) Date de publication et mention de la délivrance du brevet: **11.08.2010**
(21) Numéro de dépôt: 08158184.5
(22) Date de dépôt: 13.06.2008
(51) Int. Cl.: F01D 9/06

(54) **Carter d'échappement de turbomachine**
Austrittsgehäuse einer Strömungsmaschine
Turbomachine exhaust case

(30) Priorité: 13.06.2007 FR 0755718
(43) Date de publication de la demande: 17.12.2008
(73) Titulaire: SNECMA, 75015 Paris (FR)
(72) Inventeur: Bader, Valentine, 77000 Vaux le Penil (FR); Marnas, Laurent, 77000 Vaux le Penil (FR); Pommier, Nicolas, 91800 Brunoy (FR); Schnell, Christian, 77130 Forges (FR)
(74) Mandataire: Besnard, Christophe Laurent

(56) Documents cités:
- FR-A- 2 824 598
- GB-A- 630 277
- US-A- 2 744 722
- US-A- 2 936 999

## Description

L'invention concerne un carter d'échappement de turbomachine. Elle se destine à tout type de turbomachine, terrestre ou aéronautique, et plus particulièrement aux turboréacteurs d'avions.

Des exemples connus de structures formées de plusieurs bras s'étendant entre un moyeu central et une virole extérieure coaxiale avec le moyeu, sont décrits dans les demandes de brevet ou les brevets publiés suivants: FR 2824598, US 2744722, US2936999 et GB 630277. Certaines de ces structures sont utilisées en tant que carter d'échappement de turbomachine.

Plus précisément, l'invention concerne un carter d'échappement de turbomachine comprenant:
- un moyeu centré sur un axe et portant, sur chacune de ses faces amont et aval, un flasque annulaire coaxial avec le moyeu;
- une virole extérieure coaxiale avec le moyeu; et
- une pluralité de bras reliant ledit moyeu et ladite virole, chaque bras présentant des première et deuxième faces latérales opposées; dans lequel le moyeu et la virole extérieure sont distants radialement d'une longueur notée L;
   dans lequel, dans un plan de coupe radial, la première face latérale de chaque bras forme un angle aigu avec la tangente à la périphérie extérieure de chaque flasque, cet angle étant compris entre 60 et 85°; et
   dans lequel la première face latérale de chaque bras est raccordée à chaque flasque par une partie de raccordement.

Dans la présente demande, l'amont et l'aval sont définis par rapport au sens d'écoulement normal du fluide (de l'amont vers l'aval) à travers la turbomachine. Par ailleurs, la direction axiale correspond à la direction de l'axe de rotation A du rotor de la turbomachine, et une direction radiale est une direction perpendiculaire à l'axe A. De même, un plan axial est un plan comprenant l'axe de rotation A, et un plan radial est un plan perpendiculaire à l'axe A. Enfin, sauf précision contraire, les adjectifs intérieur et extérieur sont utilisés en référence à une direction radiale de sorte que la partie intérieure (i.e. radialement intérieure) d'un élément est plus proche de l'axe A que la partie extérieure (i.e. radialement extérieure) du même élément.

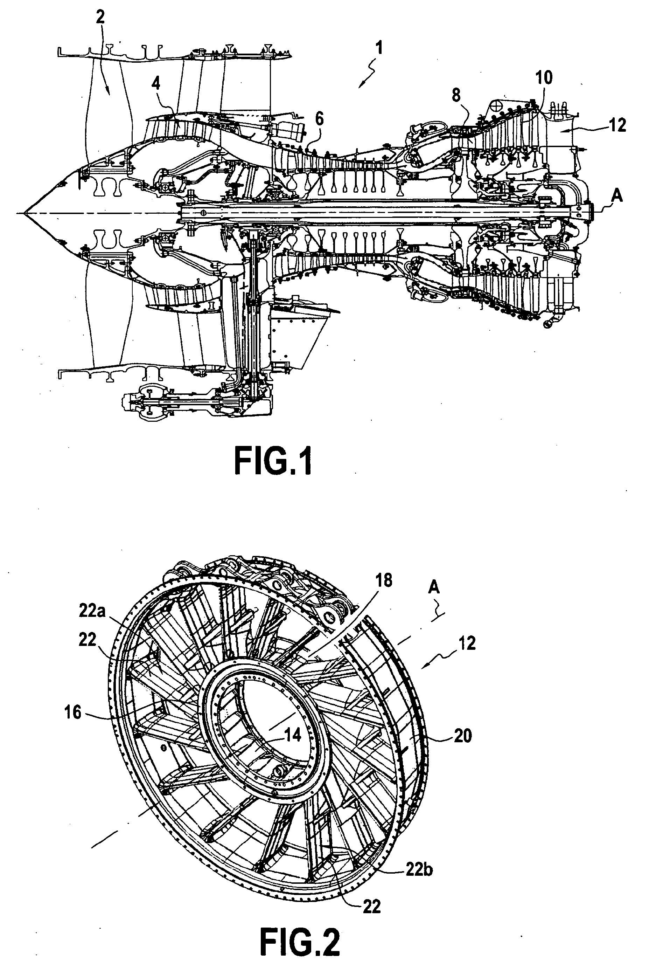

Les figures 1 à 3 annexées donnent un exemple de carter d'échappement 12 du type précité.

La figure 1 est une demi-coupe axiale d'un turboréacteur 1 double corps double flux, suivant l'axe de rotation A du rotor de ce turboréacteur. Le turboréacteur 1 comprend, de l'amont vers l'aval : une soufflante 2 ; un compresseur basse pression 4 ; un compresseur haute pression 6 ; une turbine basse pression 8 ; une turbine haute pression 10 ; et ledit carter d'échappement 12.

Le carter 12 est donc situé en aval de la turbine basse pression 10. Le carter 12 contribue à délimiter la veine primaire du fluide traversant le turboréacteur. Par ailleurs, le carter 12 soutient le rotor du turboréacteur et assure la concentricité rotor/stator. Enfin, l'alimentation et l'évacuation de l'huile qui lubrifie les paliers du turboréacteur se fait via le carter 12.

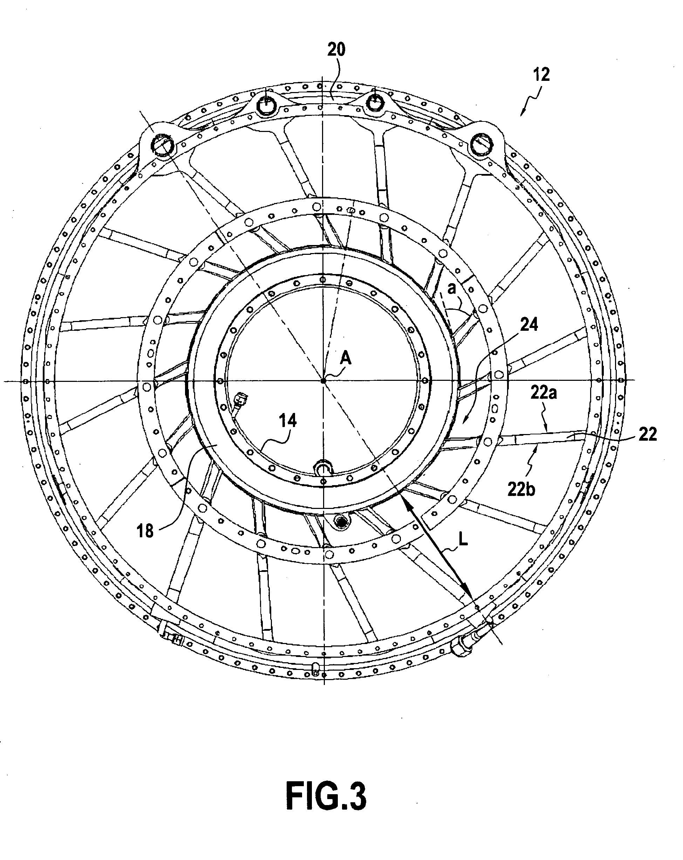

En référence aux figures 2 et 3, le carter 12 comprend :
- un moyeu 14 centré sur l'axe A et portant respectivement sur ses faces amont et aval des flasques annulaires amont 16 et aval 18, coaxiaux avec le moyeu 14;
- une virole extérieure 20 coaxiale avec le moyeu 14 ; et
- une pluralité de bras 22 (dans l'exemple représenté, seize bras) reliant le moyeu 14 et la virole 20.

Les flasques annulaires amont 16 et aval 18 sont sensiblement compris dans un plan radial et ils s'étendent vers l'extérieur, en direction de la virole 20.

Chaque bras 22 présente des première 22a et deuxième 22b faces latérales opposées. Dans un plan radial, comme celui de la figure 3, la première face latérale 22a de chaque bras 22 forme un angle "a" aigu avec la tangente à la périphérie extérieure de chaque flasque 16, 18, cet angle "a" étant compris entre 60 et 85°. Par ailleurs, la première face latérale 22a de chaque bras 22 est raccordée à chaque flasque 16, 18 par une partie de raccordement 24.

La durée de vie des carters d'échappement connus à ce jour est jugée insuffisante et l'invention a pour but d'augmenter cette durée de vie.

Dans leurs recherches ayant conduit à l'invention, les inventeurs ont trouvé que lorsque le turboréacteur fonctionnait, le carter d'échappement était sollicité par le gradient thermique entre la virole extérieure et le moyeu, ce gradient thermique générant des contraintes dans la partie de raccordement; et que le niveau de contrainte atteint dans cette partie de raccordement étant élevé, la durée de vie du carter s'en trouvait affectée.

Jusqu'à présent, dans les carters d'échappement connus, le profil de cette partie de raccordement, dans un plan de coupe radial, était défini par un arc de cercle de 3 mm de rayon.

L'invention propose un carter d'échappement du type précité avec une partie de raccordement ayant un profil optimisé de manière à abaisser le niveau de contrainte dans la partie de raccordement et donc à augmenter la durée de vie du carter d'échappement.

Ainsi, l'invention a pour objet un carter d'échappement de turbomachine comprenant:
- un moyeu centré sur un axe et portant, sur chacune de ses faces amont et aval, un flasque annulaire coaxial avec le moyeu;
- une virole extérieure coaxiale avec le moyeu; et
- une pluralité de bras reliant ledit moyeu et ladite virole, chaque bras présentant des première et deuxième faces latérales opposées;
   dans lequel le moyeu et la virole extérieure sont distants radialement d'une longueur notée L;
   dans lequel, dans un plan de coupe radial, la première face latérale de chaque bras forme un angle aigu avec la tangente à la périphérie extérieure de chaque flasque, cet angle étant compris entre 60 et 85°; et dans lequel la première face latérale de chaque bras est raccordée à chaque flasque; et
   caractérisé en ce que la première face latérale de chaque bras est raccordée à chaque flasque par une racine de raccordement dont le profil, dans un plan de coupe radial, est défini par une spline passant par N points de contrôle, N étant un nombre entier supérieur ou égal à 10, ces N points de contrôle étant définis de la manière suivante :
   soit O le point d'intersection, dans ledit plan de coupe radial, entre la droite prolongeant la première face latérale et la périphérie extérieure d'un flasque,
   soit un premier segment de droite H partant du point O et suivant la droite prolongeant ladite première face latérale, dans ledit plan radial, ce segment ayant une longueur notée I1 comprise entre 3 et 15% de la longueur L, et ce segment étant divisé en N segments égaux, par N+1 points notés H(1), H(2), ..., H(N+1), le point H(N+1) étant confondu avec le point O,
   soit un deuxième segment de droite B partant du point O et suivant la tangente au point O à la périphérie extérieure dudit flasque, dans ledit plan radial, ce segment ayant une longueur notée I2 comprise entre 25% et 50% de 1, et ce segment étant divisé en N segments égaux, par N+1 points notés B(1), B(2), ..., B(N+1), le point B(N+1) étant le plus éloigné du point 0, soit D(1), D(2), ... , D(N+1) les N+1 droites reliant respectivement les points B(1) à H(1), B(2) à H(2), ... , B(N+1) à H(N+1), lesdits N points de contrôle sont les points d'intersection entre D(1) et D(2), entre D(2) et D(3), ... , entre D(N) et D(N+1).

Pour mémoire, la longueur notée L est la distance radiale séparant le moyeu et la virole extérieure du carter.

Selon l'invention, le profil de la racine de raccordement est donc une spline (ou courbe spline) déterminée, notamment, par le choix des deux paramètres I1 et I2.

La longueur I1 est choisie supérieure à 3 % pour que le profil de la racine de raccordement soit suffisamment étendu pour assurer une bonne répartition des contraintes dans cette racine. Cette bonne répartition conditionne un faible niveau de contrainte et, donc, l'amélioration de la durée de vie du carter. De plus, lorsque la longueur I1 est inférieure à 3 %, on peut rencontrer des problèmes de faisabilité de la racine de raccordement, notamment lorsque le carter est réalisé par fonderie.

La longueur I1 est choisie inférieure à 15 % de la longueur L de manière à ne pas trop rigidifier la liaison entre le moyeu et le bras, et à limiter la masse du carter.

De manière analogue, la longueur I2 est choisie supérieure à 25 % de la longueur I1 de manière à assurer une bonne répartition des contraintes dans la partie de raccordement, et à garantir la faisabilité de la racine de raccordement, notamment par fonderie. La longueur 12 est choisie inférieure à 50 % de la longueur I1 de manière à ne pas trop rigidifier la liaison entre le moyeu et le bras concerné, et à limiter la masse du carter.

La forme du profil de la racine de raccordement retenue, à savoir une spline, contribue également à optimiser la répartition des contraintes dans cette racine, et ainsi à minimiser le niveau de contrainte dans cette racine afin d'améliorer la durée de vie du carter.

L'invention et ses avantages seront mieux compris à la lecture de la description détaillée qui suit, d'un exemple de carter d'échappement selon l'invention. Cette description détaillée fait référence aux figures annexées sur lesquelles :
- la figure 1 est une demi-coupe axiale d'un exemple de turboréacteur d'avion, suivant l'axe A de rotation du rotor du turboréacteur ;
- la figure 2 est une vue avant, en perspective, d'un exemple de carter d'échappement du type de l'invention;
- la figure 3 est une vue arrière du carter d'échappement de la figure 2, le plan de la figure 3 étant un plan radial, perpendiculaire à l'axe A; et
- la figure 4 est une vue de détail de la racine de raccordement entre le flasque annulaire aval du moyeu et la première face latérale d'un des bras structuraux du carter, dans un plan de coupe radial passant par cette racine de raccordement.

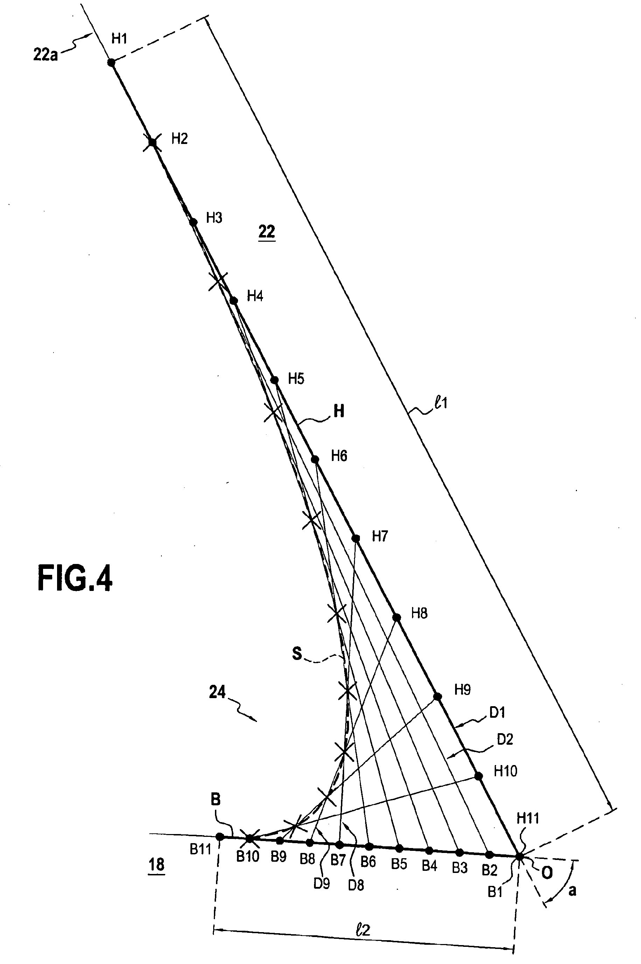

Les figures 1 à 3 ont été précédemment décrites et montrent un exemple de carter d'échappement du type de l'invention. L'invention porte plus particulièrement sur la partie de raccordement (voir figures 3 et 4) entre la première face latérale 22a de chaque bras 22 et chaque flasque annulaire 16, 18, du moyeu 14.

Une telle partie de raccordement 24 est représentée en détail sur la figure 4, en coupe dans un plan de coupe radial passant par cette partie 24. Sur cette figure 4, on voit que la partie de raccordement 24 entre la première face latérale 22a d'un bras 22 et la périphérie extérieure du flasque annulaire aval 18, est une racine de raccordement dont le profil est délimité par une spline S.

Cette spline S passe par N points de contrôle, N étant ici égal à 10. Ces N points de contrôle sont définis de la manière suivante : soit O le point d'intersection dans le plan de coupe radial de la figure 4, entre la droite prolongeant la première face latérale 22a et la périphérie extérieure du flasque annulaire aval 18. On choisit un premier segment de droite H partant du point O et suivant la droite prolongeant la première face latérale 22a, dans le plan de coupe de la figure 4. Ce segment H a une longueur I1. Cette longueur I1 est choisie entre 3 et 15 % de la longueur L (repérée sur la figure 3). Ce segment H est divisé en 10 segments égaux par 11 points notés H1, H2, ..., H11, le point H11 étant confondu avec le point O, comme indiqué sur la figure 4. On choisit ensuite un deuxième segment de droite B partant du point 0 et suivant la tangente au point 0 à la périphérie extérieure du flasque annulaire aval 18, dans le plan de coupe de la figure 4. Le segment B étant généralement de longueur beaucoup plus faible que celle de la périphérie extérieure circulaire du flasque annulaire, ce segment reste très proche de cette périphérie extérieure et, sur la figure 4, il apparaît confondu avec cette périphérie extérieure. Le segment B a une longueur notée I2, choisie entre 25 et 50 % de la longueur I1. Ce segment est divisé en 10 segments égaux par 11 points notés B1, B2, ..., B11, le point B11 étant le plus éloigné du point O, comme indiqué sur la figure 4. On trace ensuite les 11 droites notées D1, D2, ..., D11 reliant respectivement les points B1 et H1, B2 et H2, ..., B11 et H11 (on notera que la droite D1 comprend le segment H et que la droite D11 comprend le segment B). On repère ensuite les points d'intersection entre les droites D1 et D2, D2 et D3, ..., D10 et D11. On obtient ainsi les 10 points d'intersection repérés par une croix sur la figure 4. Enfin, on fait passer une spline S par ces 10 points de contrôle.

A titre illustratif, un carter d'échappement du type de celui représenté sur les figures peut présenter les dimensions suivantes:
- diamètre intérieur de la virole 20: 1000 mm;
- diamètre extérieur des flasque annulaires 16 et 18: 465 mm;
- écartement des bras 22 au niveau de la virole 20: 200 mm;
- longueur L: 535mm (1000 - 465);
- longueur I1: 40mm (soit environ 7,5% de L);
- longueur I2: 16mm (soit 40% de I1).

## Revendications

1. Carter d'échappement (12) de turbomachine comprenant:
- un moyeu (14) centré sur un axe (A) et portant, sur chacune de ses faces amont et aval, un flasque annulaire (16, 18) coaxial avec le moyeu;
- une virole extérieure (20) coaxiale avec le moyeu; et
- une pluralité de bras (22) reliant ledit moyeu et ladite virole, chaque bras présentant des première et deuxième faces latérales opposées (22a, 22b); dans lequel le moyeu et la virole extérieure sont distants radialement d'une longueur notée L; et
dans lequel, dans un plan de coupe radial, la première face latérale (22a) de chaque bras forme un angle aigu (a) avec la tangente à la périphérie extérieure de chaque flasque (16, 18), cet angle (a) étant compris entre 60 et 85°;
**caractérisé en ce que** la première face latérale (22a) de chaque bras est raccordée à chaque flasque (16, 18) par une racine de raccordement dont le profil, dans un plan de coupe radial, est défini par une spline passant par N points de contrôle, N étant un nombre entier supérieur ou égal à 10, ces N points de contrôle étant définis de la manière suivante :
soit O le point d'intersection, dans ledit plan de coupe radial, entre la droite prolongeant la première face latérale et la périphérie extérieure d'un flasque,
soit un premier segment de droite (H) partant du point O et suivant la droite prolongeant ladite première face latérale, dans ledit plan radial, ce segment ayant une longueur notée I1 comprise entre 3 et 15% de la longueur L, et ce segment étant divisé en N segments égaux, par N+1 points notés H(1), H(2), ..., H(N+1), le point H(N+1) étant confondu avec le point 0,
soit un deuxième segment de droite (B) partant du point 0 et suivant la tangente au point 0 à la périphérie extérieure dudit flasque, dans ledit plan radial, ce segment ayant une longueur notée 12 comprise entre 25% et 50% de I1, et ce segment étant divisé en N segments égaux, par N+1 points notés B(1), B(2), ..., B(N+1), le point B(N+1) étant le plus éloigné du point 0,
soit D(1), D(2), ... , D(N+1) les N+1 droites reliant respectivement les points B(1) à H(1), B(2) à H(2), ... , B(N+1) à H(N+1),
lesdits N points de contrôle sont les points d'intersection entre D(1) et D(2), entre D(2) et D(3), ... , entre D(N) et D(N+1).

2. Turbomachine comprenant un carter d'échappement selon la revendication 1.

## Claims

1. An exhaust casing (12) for a turbomachine, the casing comprising:
- a hub (14) centered on an axis (A) and carrying, on each of its upstream and downstream faces, an annular endplate (16, 18) that is coaxial with the hub;
- an outer shroud (20) coaxial with the hub; and
- a plurality of arms (22) interconnecting said hub and said shroud, each arm presenting opposite first and second side faces (22a, 22b) in which the hub and the outer shroud are spaced apart radially by a length written L; and
in which, in a radial section plane, the first side face (22a) of each arm forms an acute angle (a) with the tangent to the outer periphery of each endplate (16, 18), said angle (a) lying in the range 60° to 85°; **characterized in that** the first side face (22a) of each arm is connected to each endplate (16, 18) by a connection root of profile, in a radial section plane, that is defined by a spline passing via N control points, N being an integer greater than or equal to 10, these N control points being defined as follows:
let O be the point of intersection in said radial section plane between the straight line extending the first side face and the outer periphery of an endplate;
let there be a first straight-line segment (H) starting from the point O and
following the straight line extending said first side face in said radial plane,
this segment being of length written ℓ1 lying in the range 3% to 15% of the length L, and this segment being subdivided into N equal segments by N+1 points written H(1), H(2), ..., H(N+1), the point H(N+1) coinciding with the point O;
let there be a second straight-line segment (B) starting from the point O and following the tangent at the point O to the outer periphery of said endplate in said radial plane, said segment having a length written ℓ2 lying in the range 25% to 50% of ℓ1, and said segment being subdivided into N equal segments by N+1 points written B(1), B(2), ..., B(N+1), the point B(N+1) being the furthest from the point O, and
let D(1), D(2), ..., D(N+1) be the N+1 straight lines respectively interconnecting the points B(1) to H(1), B(2) to H(2), ..., and B(N+1) to H(N+1);
said N control points are the points of intersection between D(1) and D(2), between D(2) and D(3), ..., and between D(N) and D(N+1).

2. A turbomachine including an exhaust casing according to claim 1.

## Patentansprüche

1. Austrittsgehäuse (12) einer Turbomaschine, umfassend:
- eine Nabe (14), die um eine Achse (A) zentriert ist und die an jeder ihrer stromaufwärtigen und stromabwärtigen Seite einen mit der Nabe koaxialen, ringförmigen Flansch (16, 18) trägt,
- einen mit der Nabe koaxialen Außenring (20) und
- eine Vielzahl von Armen (22), welche die Nabe und den Ring verbinden, wobei jeder Arm erste und zweite gegenüberliegende Seitenflächen (22a, 22b) aufweist, wobei die Nabe und der Außenring um eine Länge L radial beabstandet sind,
und
wobei in einer radialen Schnittebene die erste Seitenfläche (22a) jedes Arms einen spitzen Winkel (a) mit der Tangente an den Außenumfang jedes Flansches (16, 18) bildet, wobei dieser Winkel (a) zwischen 60 und 85° beträgt,
**dadurch gekennzeichnet, daß** die erste Seitenfläche (22a) jedes Arms mit jedem Flansch (16, 18) durch eine Verbindungswurzel verbunden ist, deren Profil - in einer radialen Schnittebene - durch einen durch N Kontrollpunkte verlaufenden Spline definiert ist, wobei N eine Ganzzahl größer oder gleich 10 ist, wobei diese N Kontrollpunkte folgendermaßen definiert sind:
gegeben ist O der Schnittpunkt, in der radialen Schnittebene, zwischen der die erste Seitenfläche fortsetzenden Geraden und dem Außenumfang eines Flansches,
gegeben ist ein erstes Geradensegment (H) in der Radialebene, das vom Punkt O ausgeht und das der die erste Seitenfläche fortsetzenden Geraden folgt, wobei dieses Segment eine Länge 11 zwischen 3 und 15 % der Länge L aufweist und wobei dieses Segment durch N+1 Punkte H(1), H(2), ..., H(N+1) in N gleiche Segmente unterteilt ist, wobei der Punkt H(N+1) mit dem Punkt O verschmolzen ist,
gegeben ist ein zweites Geradensegment (B) in der Radialebene, das vom Punkt O ausgeht und das der Tangente am Punkt O an den Außenumfang des Flansches folgt, wobei dieses Segment eine Länge 12 zwischen 25 % und 50 % von 11 aufweist und wobei dieses Segment durch N+1 Punkte B(1), B(2), ... , B(N+1) in N gleiche Segmente unterteilt ist, wobei der Punkt B(N+1) der vom Punkt O am weitesten entfernte ist,
gegeben sind D(1), D(2), ... , D(N+1) die N+1 Geraden, welche die Punkte B(1) mit H(1), B(2) mit H(2), ..., bzw. B(N+1) mit H(N+1) verbinden,
die N Kontrollpunkte sind die Schnittpunkte zwischen D(1) und D(2), zwischen D(2) und D(3), ..., zwischen D(N) und D(N+1).

2. Turbomaschine, die ein Austrittsgehäuse nach Anspruch 1 umfaßt.
